# EUROPEAN PATENT SPECIFICATION

(11) **EP 0 798 105 B1**
(45) Date of publication and mention of the grant of the patent: **25.04.2001**
(21) Application number: 97301961.5
(22) Date of filing: 24.03.1997
(51) Int. Cl.: B29C 65/18, B30B 15/06, B31B 3/28

(54) **A packaging machine**
Verpackungsmaschine
Machine d'emballage

(30) Priority: 29.03.1996 US 624099
(43) Date of publication of application: 01.10.1997
(73) Proprietor: ELOPAK SYSTEMS AG, 8152 Glattbrugg (CH)
(72) Inventor: Podsiadlo, James E., Walled Lake, Michigan 48390 (US); Kucera, Mark R., Walled Lake, Michigan 48390 (US)
(74) Representative: Burrows, Anthony Gregory

(56) References cited:
- EP-A- 0 242 805
- EP-A- 0 489 526
- DE-A- 3 018 629
- FR-A- 686 942
- US-A- 3 243 934
- US-A- 4 038 908
- US-A- 4 930 288
- US-A- 5 555 708

## Description

This invention relates generally to a sealing arrangement for sealing overlapped packaging material portions backed by a mandrel in a packaging machine, and, more specifically, to a self-aligning, overtravel drive arrangement for sealing overlapped panels of a flat end closure of a four-sided carton mounted around the mandrel.

Heretofore, sealing of overlapped flat surface materials have included various elastomeric or rubber or other type of flexible platens or pressure pads, wherein such elements have been in direct contact with the materials being pressed, to account for variations in material thicknesses. Such arrangements are disclosed in US-A-3,493,451; US-A-4,430,069; US-A-4,529,472; US-A-4,704,183; US-A-4,715,923; and US-A-4,952,777.

FR-A-686942 discloses a press for the manufacture of stereotype matrices, particularly such press having a hydraulically operated working table or plunger. In one example, a rectangular abutment plate of rubber is provided on the underside of the press head which, while guided on guides, is moved vertically in the press frame by a hydraulic piston. The abutment plate is closely surrounded by a frame which prevents the rubber from giving laterally and which has a rigid bottom which forms a pressure plate. The frame is held by screw bolts which are vertically slidable in the press head and by the tightening of which the abutment plate may be given a certain initial stressing. On the press head being lowered, the pressure plate comes into contact with the composition or the like resting on a working table or on an enclosing frame thereof. To the extent to which the abutment plate yields, the frame with the screw bolts will move upwards during the pressing operation and will adjust itself to be parallel to the working plane.

US-A-4,641,482 discloses heat transfer members which are forced toward the path of moving packages by an adjacent leaf spring.

US-A-4,084,999 discloses a sealing arrangement wherein a coil spring is resiliently mounted between a friction rim and a sleeve secured in a bracket, wherein the friction rim rolls along the material being sealed.

US-A-4,306,400 discloses a packaging machine with a continuous-motion top sealer for pouches, in which sealing heads for heat-sealing the tops of continuously movable upright pouches are spaced angularly around a continuously rotatable turret and seal the pouches after steam has been introduced into the pouches and as the pouches move in an arcuate path extending around the turret. Each sealing head includes a pair of heated sealing bars and further includes a cam-operated actuator which sequentially lowers, closes, opens and then raises the bars as the bars rotate with the turret. One sealing bar of each pair consists of a TEFLON-covered metal bar, whilst the other bar consists of an elastomeric pad bonded to a metal plate and both covered with a TEFLON jacket.

US-A-4,930,288 discloses a heatable sealing head for sealing a cover made of a foil material onto a plastic cup. The sealing head is mounted on an I-form insulating body which provides for the compensation of form and position deviation between the sealing head and the plastic cups to be sealed. This insulating body simultaneously provides for thermal insulation between the sealing head and the drive arrangement and is made of, e.g. amide-imide polymer. In order that drive may be transmitted through the body, its upper limb is bolted to a driving plate thereabove, whilst its lower limb is bolted to the sealing head therebelow.

NL-A-8104901 discloses a thermal sealing head for attaching a sealing foil over the mouth of a container. The head includes a heat-conducting body to which an electrical heating element is attached. A hollow bolt is screwed from above into a vertical bore in the body and through the bolt extends a lifting rod a lower end of which is widened and the body has a limited degree of vertical movement relative to it. That lower end incorporates a concentric shoulder which, when the rod is lifted, comes to bear against the lower end of the bolt, so that the rod then lifts the body. Owing to the facts that the rod is retractable over a certain distance within the body and there is ample radial clearance available between the rod and the inside surface of the hollow bolt, sealing has some tilting freedom, so that a pressure-applying instrument is able to take up the correct position relative to the mouth of the container. The instrument may be annular with an upwardly converging pressing surface and be mounted resiliently by way of vertical pins extending through the body and either abut an elastic disc or are hollowed to receive springs. Alternatively, the instrument may be a dish-shaped disc of flexible heat-conducting material and fixed centrally to the body by. a washer and a screw, with an elastic, heat-resistant ring and a heat-insulating ring being sandwiched between the dish-shaped disc and the body.

US-A-3,243,934 discloses a system for simultaneously capping and sealing, with a flexible, heat-sealable sheet, a plurality of individual cup-form containers distributed in a wire basket. A manually-operated pinion-and-rack device lowers onto the sheet a sealing head consisting of a horizontal, rigid, back-up plate connected to the rack, a resilient cushion of any suitable resilient material not deteriorated by heat, e.g. a foamed polyurethane, an electrically heated pad, and a metal plate formed with recesses adapted to fit around the tops of the containers.

Packaging machines are known which manufacture packaging cartons of the gable-top type from flexible packaging laminate and handle prefabricated, tubular carton blanks which are provided with a bottom through folding-in and sealing of a number of bottom wall panels. The bottom is pressed down and sealed whilst the blank is supported by a mandrel on a mandrel wheel.

In order to avoid the transmission of the pressing-down and sealing forces to, and stressing of, the axle and bearing of the mandrel wheel in such a machine, EP-A-0242805 proposes an arrangement which is designed so that the compressive forces generated by means of the pressure-applying devices are absorbed by a tie rod which connects the pressure-application arrangement with the axle of the mandrel wheel, so that the forces are absorbed internally without stressing the mandrel wheel axle or other surrounding elements. The pressure-applying devices each include a pressure shaft which supports on its end nearer the mandrel wheel a pressure plate which by means of guiding elements is connected to the pressure shaft, but is held at a distance from the same, with a predefined force, with the help of precompressed, helical compression springs.

According to the present invention, there is provided a packaging machine including a sealing arrangement for sealing overlapped packaging sheet material portions, said sealing arrangement including a mandrel for backing said portions, a pressure-applying means for pressing said portions against said mandrel, a drive member, resilient means between the drive member and the pressure-applying means, and drive means for urging, via said drive member and said resilient means, said pressure-applying means into engagement with the overlapped portions, characterized in that said resilient means comprises an elastomeric pad permitting tilting of said pressure-applying means relative to said drive member, whereby said sealing arrangement is both self-aligning and overtravel protective.

Owing to the invention, the sealing arrangement in a packaging machine is both self-aligning and overtravel protective.

Self-alignment is particularly advantageous where, possibly owing to an incorrect initial set-up, or to the outwardly facing surface of the overlapped portions being other than flat and/or other than perpendicularly orientated, the pressure-applying means would otherwise apply to parts of the overlapped portions pressures different from those desired. Overtravel protection is particularly desirable with the present sealing arrangement including a mandrel, since otherwise, in the event of an incorrect initial set-up or a failure to change a set-up when, for example, packaging sheet material of a different thickness from initially is supplied to the packaging machine, operation of the machine is automatically stopped by overload detection and thus production is stopped, or, even worse, damage may be caused to various parts of the machine by the overloading.

The invention is particularly applicable to the sealing of end closure panels of a gable-topped or flat-topped carton, especially bottom end closure panels thereof.

In a preferred embodiment of the invention, a panel sealing arrangement includes an assembly of interconnected pressure pad, back-up plate, shim, and collar components; an opening formed through the collar and having, progressing towards the pressure pad, cylindrical and frusto-conical wall surfaces, a drive member extending to a frusto-conical distal end segment of the drive member seated complementarily on the frusto-conical wall surface, a recess formed in the back-up plate opposite the frusto-conical wall surface, an elastomeric pad compressed between a base wall of the recess and the frusto-conical distal end segment, and a drive unit for driving the drive member, thereby to urge the pressure pad via the elastomeric pad into pressure-sealing engagement with the overlapped flat panels on the mandrel.

In order that the invention may be clearly understood and readily carried into effect, reference will now be made, by way of example, to the accompany drawings, in which:-
Figure 1 is a diagrammatic side perspective view of a forming, filling and sealing machine, in particular of a turret thereof; and
Figure 2 is an enlarged, partially cross-sectional view taken along the plane of the line 2-2 of Figure 1, and looking in the direction of the arrows.

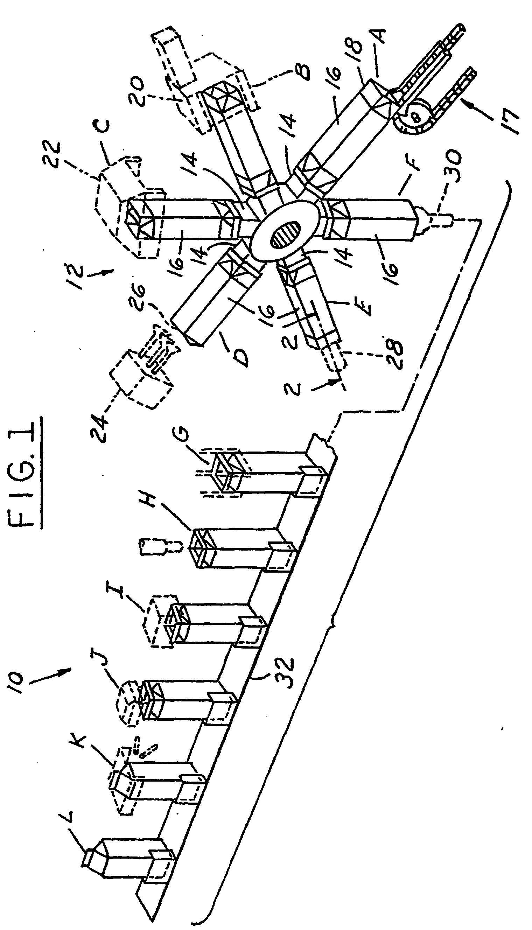

Referring now to the drawings, Figure 1 illustrates a forming, filling and sealing machine, represented as 10, including an indexible turret 12 having a plurality of radially extending mandrels 14. Thermoplastic-coated paperboard carton sleeves 16 are loaded by a loading mechanism 17 onto respective mandrels 14 at a loading station A at, say, 4:00 o'clock. Each loaded mandrel 14 and its carton 16 with end closure panels 18 thereof extended beyond the end face 26 of the mandrel, are indexed to a prebreaking station B at, say, 2:00 o'clock, where a prebreaker unit 20 initially breaks scorelines of the panels 18 in a usual manner.

The mandrel 14 and the carton 16 are then indexed to a heating station C at 12:00 o'clock, where a heater 22 heats the extended panels 18, and are then indexed to a folding station D at 10:00 o'clock, where a folding mechanism 24 folds the heated panels 18 into a flat configuration with overlapping edge portions, against the end face 26 of the mandrel 14. At a sealing station E at 8:00 o'clock, a pressure sealing assembly 28 is pressed against the flat end closure to seal the heated overlapped edge portions of the panels 18 together.

The mandrel 14 and the carton 16 are then indexed to a station F at 6:00 o'clock, where the carton is stripped by a stripper 30 and placed on a conveyor 32 for further downstream filling and top-sealing operations, represented as G, H, I, J, K and L, and conventional.

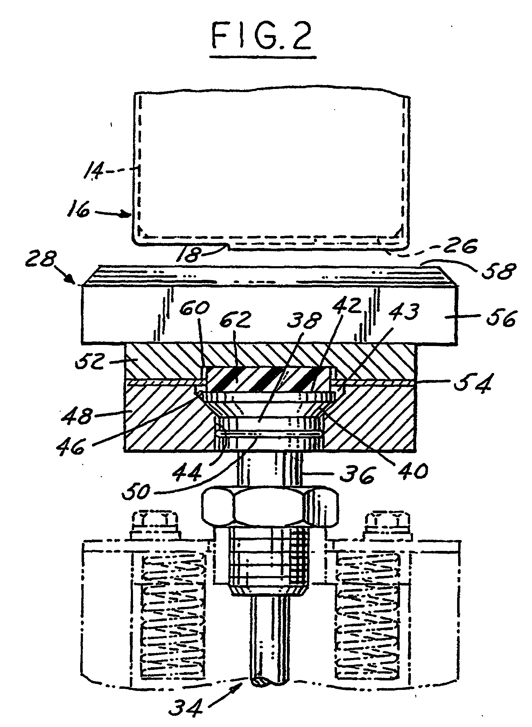

Referring now to Figure 2, the pressure sealing assembly 28 includes a mechanical or hydraulic drive unit, represented at 34, having a drive stud 36 extending therefrom to connect with a larger diameter, substantially circular-cylindrical segment 38. A substantially frusto-conical terminal segment 40 is formed on the larger diameter segment 38. A flat face 42 of a yet larger diameter than the segment 38 is formed on the segment 40. The segments 38 and 40 extend through an opening 43 defined by cylindrical and frusto-conical wall surfaces 44 and 46, respectively, formed in a collar 48. The frusto-conical form of each of the wall surfaces 44 and 46 permits tilting of the collar 48 and thus the assembly 28 relative to the drive stud 36. An 0-ring seal 50 is confined in a clearance provided between the segment 38 and the surface 44 and permitting tilting of the collar 48 and thus the assembly 28 relative to the stud 36. The O-ring seal 50 centres the collar 48 relative to the drive stud 36. The collar 48 is secured in any suitable manner, such as by screws (not shown), to a back-up plate 52, with a shim 54 therebetween. A pressure pad 56 is secured in any suitable manner to the back-up plate 52. A flat face 58 may be formed on the outer end of the pressure pad 56.

A recess 60 is formed in the back-up plate 52 directly opposite the flat face 42. A disc-shaped pad 62 formed of a suitable elastomeric material, such as urethane, is mounted between the flat end face 42 and the bottom of the recess 60, under a slight compression at assembly. The shim 54 thickness is selected to provide the desired compression of the pad 62 and can, when necessary, be changed between production runs.

In operation, the face 58 of the pressure pad 56 is extended by the drive stud 36 with its end segments 38 and 40 and the elastomeric pad 62, into engagement with the edge portions of any overlapped laminates, such as the end panels 18 of the carton 16 mounted around the mandrel 14, to squeeze the panels between the pressure face 58 and the end face 26 of the mandrel. Owing to the clearance between the segment 38 and the collar 48 and to the upwardly diverging shapes of the surfaces 40 and 46, the assembly 28 can tilt relative to the stud 36 to adapt itself to the orientation of the squeezed panels. The segment 40 does not come into contact with the plate 52 or the shim 54, so that all of the driving force is transmitted resiliently through the pad 62.

Being of a predetermined durometer and under a predetermined slight compression, the elastomeric pad 62 serves the following purposes: (1) to act as a protective overtravel device for the drive unit 34; (2) to allow automatic adjustment of the pressure pad 56 and its associated back-up plate 52 and the collar 48: (2a) for any differences in protrusion of various parts of the outside surface of a carton bottom end closure, (2b) for any differences in thickness of the panels 18 of successive cartons, (2c) for any incorrect initial set-up of the pressure pad 56, and/or (2d) for any subsequent event jarring the pressure pad 56 out of position, such as any interference with an edge thereof. An advantage of the predetermined slight pre-compression of the pad 62 is that the user is better able to determine the value of the actual pressure which is applied to the overlapped panels. An advantage of use of an elastomeric pad over use of a coil or leaf spring is that it can be more compact for the same degree of resistance to compression.

While but one embodiment of the invention has been shown and described, other embodiments thereof are possible. For example, the invention is applicable to top-sealing of a carton, such as at station K, wherein overlapped top end panel parts are squeezed between two jaws, in which case a jaw assembly and drive arrangement corresponding to the pressure sealing assembly 28 would be provided for one of the two jaws and the other jaw would constitute the mandrel.

## Claims

1. A packaging machine including a sealing arrangement (14,28) for sealing overlapped packaging sheet material portions (18), said sealing arrangement (14,28) including a mandrel (14) for backing said portions (18), a pressure-applying means (52,56) for pressing said portions (18) against said mandrel (14), a drive member (36), resilient means (62) between the drive member (36) and the pressure-applying means (52,56), and drive means (34) for urging, via said drive member (36) and said resilient means (62), said pressure-applying means (52,56) into engagement with the overlapped portions (18), characterized in that said resilient means (62) comprises an elastomeric pad (62) permitting tilting of said pressure-applying means (52,56) relative to said drive member (36), whereby said sealing arrangement (14,28) is both self-aligning and overtravel protective.

2. A packaging machine according to claim 1, wherein said elastomeric pad (62) is substantially permanently in a condition compressed between said drive member (36) and said pressure-applying means (52,56).

3. A packaging machine according to claim 1 or 2, wherein said pressure-applying means (52,56) comprises housing means (48,52), an opening (43) into said housing means (48,52) and into which said drive member (36) extends, said housing means (48,52) receiving said elastomeric pad (62) and a nearer end portion (38) of said drive member (36).

4. A packaging machine according to claim 3, wherein an internal surface (46) of said housing means (48,52) and a surface (40) of said end portion (38) come into contact with each other to limit movement of said end portion (38) away from said mandrel (14) relative to said housing means (48,52), and one of these surfaces (40,46) is of a shape which diverges towards said mandrel (14).

5. A packaging machine according to claim 4, wherein the other of said surfaces (40, 46) is of a shape complementary to that of said one of these surfaces (40,46) and thus diverges towards said mandrel (14).

6. A packaging machine according to claim 3, 4, or 5, wherein there is clearance between a cylindrical annular surface (44) of said opening (43) and a cylindrical annular surface of said drive member (36), whereby said housing means (48,52) can tilt relative to said drive member (36), and said sealing arrangement further comprises a ring (50) encircling said drive member (36), bridging said clearance and permitting tilting of said housing means (48,52) relative to said drive member (36).

7. A packaging machine according to claim 6, wherein said ring (50) is an O-ring seal.

8. A packaging machine according to any one of claims 3 to 7 as appended to claim 2, wherein said sealing arrangement (14,28) further comprises a shim (54) between first and second parts (48,52) of said housing means (48,52) for setting the desired initial compression of said elastomeric pad (62).

9. A packaging machine according to any one of claims 3 to 8, wherein said housing means (48,52) comprises a back-up plate (52), and a collar (48), said opening (43) is formed through the collar (48) to receive said end portion (38), a recess (60) is formed in the back-up plate (52), and said elastomeric pad (62) is confined between a base wall of said recess (60) and said end portion (38).

10. A packaging machine according to any preceding claim, wherein said elastomeric pad (62) is formed of urethane.

## Patentansprüche

1. Verpackungsmaschine mit einer Versiegelungsanordnung (14,28) zum Versiegeln einander überlappender Verpackungsmaterialbahnbereiche (18), wobei die Versiegelungsanordnung (14,28) einen Dorn (14) zum Abstützen der Bereiche (18), eine Druckbeaufschlagungseinrichtung (52,56) zum Andrücken der Bereiche (18) gegen den Dorn (14), ein Betätigungselement (36), eine elastische Einrichtung (62) zwischen dem Betätigungselement (36) und der Druckbeaufschlagungseinrichtung (52,56) und eine Betätigungseinrichtung (34), mit der die Druckbeaufschlagungseinrichtung (52,56) über das Betätigungselement (36) und die elastische Einrichtung (62) an den einander überlappenden Bereichen (18) angreift, aufweist,
dadurch gekennzeichnet, dass
die elastische Einrichtung (62) ein elastomeres Polster (62) aufweist, das ein Kippen der Druckbeaufschlagungseinrichtung (52,56) relativ zu dem Betätigungselement (36) ermöglicht, wodurch die Versiegelungsanordnung (14,28) sowohl selbstausrichtend als auch gegen Überbewegung geschützt ist.

2. Verpackungsmaschine nach Anspruch 1, bei der das elastomere Polster (62) im wesentlichen permanent in zusammengedrücktem Zustand zwischen dem Betätigungselement (36) und der Druckbeaufschlagungseinrichtung (52,56) angeordnet ist.

3. Verpackungsmaschine nach Anspruch 1 oder 2, bei der die Druckbeaufschlagungseinrichtung (52,56) eine Gehäuseeinrichtung (48,52) und eine Öffnung (43) in der Gehäuseeinrichtung (48,52) aufweist, in die sich das Betätigungselement (36) erstreckt, wobei die Gehäuseeinrichtung (48,52) das elastomere Polster (62) und einen näherliegenden Endbereich (38) des Betätigungselements (36) aufnimmt.

4. Verpackungsmaschine nach Anspruch 3, bei der eine Innenfläche (46) der Gehäuseeinrichtung (48,52) und eine Fläche (40) des Endbereichs (38) zwecks Begrenzung der Bewegung des Endbereichs (38) relativ zu der Gehäuseeinrichtung (48,52) vom Dorn (14) weg miteinander in Berührung kommen und eine dieser Flächen (40,46) derart geformt ist, dass sie in Richtung auf den Dorn (14) divergiert.

5. Verpackungsmaschine nach Anspruch 4, bei der die andere Fläche (40,46) eine zu der einen Fläche (40,46) komplementäre Form aufweist und somit in Richtung auf den Dorn (14) divergiert.

6. Verpackungsmaschine nach Anspruch 3, 4 oder 5, bei der ein Zwischenraum zwischen einer zylindrischen ringförmigen Fläche (44) der Öffnung (43) und einer zylindrischen ringförmigen Fläche des Antriebselements (36) vorgesehen ist, wodurch die Gehäuseeinrichtung (48,52) relativ zu dem Antriebselement (36) kippbar ist, und bei der die Versiegelungsanordnung ferner einen Ring (50) aufweist, der das Antriebselement (36) umfasst, den Zwischenraum überbrückt und ein Kippen der Gehäuseeinrichtung (48,52) relativ zu dem Antriebselement (36) ermöglicht.

7. Verpackungsmaschine nach Anspruch 6, bei der der Ring (50) eine O-Ring-Dichtung ist.

8. Verpackungsmaschine nach einem der Ansprüche 3 bis 7 in Verbindung mit Anspruch 2, bei der die Versiegelungsanordnung (14,28) ferner zum Einstellen der gewünschten anfänglichen Kompression des elastomeren Polsters (62) eine Unterlegscheibe (54) zwischen einem ersten und einem zweiten Teil (48,52) der Gehäuseeinrichtung (48,52) aufweist.

9. Verpackungsmaschine nach einem der Ansprüche 3 bis 8, bei der die Gehäuseeinrichtung (48,52) eine Stützplatte (52) und einen Kragen (48) aufweist, wobei die Öffnung (43) zur Aufnahme des Endbereichs (38) durch den Kragen (48) verläuft, eine Ausnehmung (60) in der Stützplatte (52) ausgebildet ist und das elastomere Polster (62) zwischen einer Basiswand der Ausnehmung (60) und dem Endbereich (38) eingeschlossen ist.

10. Verpackungsmaschine nach einem der vorhergehenden Ansprüche, bei der das elastomere Polster (62) aus Urethan besteht.

## Revendications

1. Une machine d'emballage comprenant une disposition de scellage (14, 28) pour sceller des parties de feuilles de matière d'emballage en recouvrement (18), ladite disposition de scellage (14, 28) comprenant un mandrin (14) pour supporter lesdites parties (18), un moyen d'application de pression (52, 56) pour presser lesdites parties (18) contre ledit mandrin (14), un élément d'entraînement (36), des moyens élastiques (62) entre l'élément d'entraînement (36) et le moyen d'application de pression (52, 56), et un moyen d'entraînement (34) pour pousser, par l'intermédiaire dudit élément d'entraînement (36) et desdits moyens élastiques (62), ledit moyen d'application de pression (52, 56) en contact avec les parties en recouvrement (18), caractérisée en ce que lesdits moyens élastiques (62) comprennent un patin élastomère (62) permettant l'inclinaison dudit moyen d'application de pression (52, 56) par rapport audit élément d'entraînement (36), de sorte que ladite disposition de scellage (14, 28) est à la fois auto-alignante et protectrice de dépassement de position limite.

2. Une machine d'emballage selon la revendication 1, dans laquelle ledit patin élastomère (62) est dans un état sensiblement permanent de compression entre ledit élément d'entraînement (36) et ledit moyen d'application de pression (52, 56).

3. Une machine d'emballage selon la revendication 1 ou 2, dans laquelle ledit moyen d'application de pression (52, 56) comprend un moyen formant boîtier (48, 52), une ouverture (43) dans ledit moyen formant boîtier (48, 52) et à l'intérieur de laquelle s'étend ledit élément d'entraînement (36), ledit moyen formant boîtier (48, 52) recevant ledit patin élastomère (62) et une partie d'extrémité plus proche (38) dudit élément d'entraînement (36).

4. Une machine d'emballage selon la revendication 3, dans laquelle une surface interne (46) dudit moyen formant boîtier (48, 52) et une surface (40) de ladite partie d'extrémité (38) viennent en contact l'une avec l'autre pour limiter le mouvement de ladite partie d'extrémité (38) hors dudit mandrin (14) par rapport audit moyen formant boîtier (48, 52), une première de ces surfaces (40, 46) étant d'une forme qui diverge vers ledit mandrin (14).

5. Une machine d'emballage selon la revendication 4, dans laquelle l'autre desdites surfaces (40, 46) est d'une forme complémentaire à celle de ladite première de ces surfaces (40, 46) et diverge ainsi vers ledit mandrin (14).

6. Une machine d'emballage selon la revendication 3, 4 ou 5, dans laquelle il existe un jeu entre une surface annulaire cylindrique (44) de ladite ouverture (43) et une surface annulaire cylindrique dudit élément d'entraînement (36), de sorte que ledit moyen formant boîtier (48, 52) peut s'incliner par rapport audit élément d'entraînement (36), ladite disposition de scellage comprenant en outre une bague (50) entourant ledit élément d'entraînement (36), en pontant ledit jeu et en permettant l'inclinaison dudit moyen formant boîtier (48, 52) par rapport audit élément d'entraînement (36).

7. Une machine d'emballage selon la revendication 6, dans laquelle ladite bague (50) est un joint torique.

8. Une machine d'emballage selon une quelconque des revendications 3 à 7 dans leur dépendance de la revendication 2, dans laquelle ladite disposition de scellage (14, 28) comprend en outre une cale (54) entre de première et seconde parties (48, 52) dudit moyen formant boîtier (48, 52) pour régler la compression initiale désirée dudit patin élastomère (62).

9. Une machine d'emballage selon une quelconque des revendications 3 à 8, dans laquelle ledit moyen formant boîtier (48, 52) comprend une plaque de support (52) et un collet (48), ladite ouverture (43) est formée à travers le collet (48) pour recevoir ladite partie d'extrémité (38), un évidement (60) est formé dans la plaque de support (52), ledit patin élastomère (62) étant confiné entre une paroi de base dudit évidement (60) et ladite partie d'extrémité (38).

10. Une machine d'emballage selon une quelconque revendication précédente, dans laquelle ledit patin élastomère (62) est formé d'uréthanne.
